Europäisches Patentamt

European Patent Office

Office européen des brevets

(19)

(11) Veröffentlichungsnummer : **0 171 756**
**B1**

(12)                    **EUROPÄISCHE PATENTSCHRIFT**

(45) Veröffentlichungstag der Patentschrift :
02.11.89

(51) Int. Cl.⁴ : **B 29 C 47/58**, B 29 C 47/66

(21) Anmeldenummer : 85109963.0

(22) Anmeldetag : 08.08.85

(54) Schneckenextruder.

(30) Priorität : 17.08.84 DE 3430254

(43) Veröffentlichungstag der Anmeldung :
19.02.86 Patentblatt 86/08

(45) Bekanntmachung des Hinweises auf die Patenterteilung : 02.11.89 Patentblatt 89/44

(84) Benannte Vertragsstaaten :
BE DE FR GB IT NL

(56) Entgegenhaltungen :
EP-A- 0 069 271
DE-A- 3 233 841
DE-C- 3 226 918

(73) Patentinhaber : HOECHST AKTIENGESELLSCHAFT
Postfach 80 03 20
D-6230 Frankfurt am Main 80 (DE)

(72) Erfinder : Peiffer, Herbert, Dr. Dipl.-Ing.
Katzenberg 78 ·
D-6500 Mainz 21 (DE)
Erfinder : Eberhardt, Horst, Dipl.-Ing.
Hohlweg 38
D-6229 Walluf (DE)

## Beschreibung

Die Erfindung betrifft einen Schneckenextruder mit einer eine Extruderschnecke koaxial umgebenden Einzugsbüchse, die im Bereich des Materialeinlaufs angeordnet ist und an ihrem Innenumfang mehrere in Umfangsrichtung verteilte, längsverlaufende Nuten aufweist, in denen Paßstücke angeordnet sind, die radial zu der Extruderschnecke über die Tiefe der Nuten mittels Verstellmechanismen verstellbar sind.

Ein derartiger Schneckenextruder ist aus der DE-A1 32 33 841 bekannt und ist so ausgelegt, daß thermoplastische und/oder thermisch härtbare Massen, insbesondere hochmolekulare, pulver- bis granulatförmige Kunststoffe oder deren Mischungen verarbeitet werden können. Der Zylinder des Schneckenextruders ist in einen Einzugsteil und einen heizbaren Schmelzzylinder unterteilt, wobei der Einzugsteil auf seiner inneren Mantelfläche Längsnuten awfweist, die sich über seine ganze Länge oder einen Teil der Länge erstrecken. Die Längsnuten sind in ihrem Querschnitt und/oder in ihrer Länge veränderbar, indem in die Längsnuten radial von außen Stifte oder Dorne einschiebbar oder einschwenkbar sind, die durch einen außerhalb des· Einzugsteils angeordneten Antrieb bewegt werden. Diese Stifte oder Dorne sind in Durchbrüchen des zylindrischen Einzugsteils angeordnet. Ihre Bewegung erfolgt über Winkelstücke, die sich auf feste Lager abstützen, und über Schubstangen über eine Achse gedreht werden. Die Stifte und Dorne besitzen eine Höhe, die größer als die Tiefe der Längsnut ist. Die Verstellstrecke der Stifte bzw. Dorne in der Längsnut ist gering, um die Gefahr eines Verkantens der Stifte bzw. der Dorne in dem Durchbruch klein zu halten.

Aus der DE-C1 32 26 918 ist ein Schneckenextruder bekannt, der so ausgelegt ist, daß die im Extrudergehäuse sitzende und die Extruderschnecke axial umgebende Einzugsbüchse unterschiedliche Materialqualitäten relativ zu der Extruderschnecke mit unterschiedlicher Drallwirkung verarbeitet. Hierzu ist die Einzugsbüchse in einen drehbaren Längenabschnitt und in einen drehfesten Längenabschnitt unterteilt. Der drehbare Längenabschnitt ist in Einzugsrichtung hinter der Materialeinlauföffnung drehbar relativ zum Extrudergehäuse und der Extruderschnecke gelagert. Der drehfeste Längenabschnitt weist einen vor und einen hinter der Materialeinlauföffnung liegenden Bereich auf. Die Rotationsbewegung des drehbaren Längenabschnittes der Einzugsbüchse wird entweder durch einen Drehantrieb oder durch eine Bremse bestimmt. Die Einzugsnuten können über ihre ganze Länge eine gleichbleibende Breite haben oder auch eine in Einzugsrichtung konvergierende Breitenabmessung, die vorzugsweise so ausgestaltet ist, daß die Zunahme der Querschnittsbreite zur Abnahme der Querschnittshöhe umgekehrt proportional ist. Dabei nimmt die Querschnittshöhe der Einzugsnuten des drehfesten und des drehbaren Längenabschnitts über die ganze Länge der Einzugsnuten kontinuierlich ab, d. h. das Ende der Einzugsnuten im drehfesten Längenabschnitt hat die gleiche Querschnittshöhe wie der Anfang der Einzugsnuten im drehbaren Längenabschnitt. Die Querschnittsbreite der Einzugsnuten im drehfesten Längenabschnitt ist an ihrem Ende um ein Mehrfaches größer als die Querschnittsbreite der Einzugsnuten im drehbaren Längenabschnitt an ihrem Anfang. Die Querschnittsbreiten der Einzugsnuten im drehbaren Längenabschnitt sind an ihrem Ende um ein Mehrfaches breiter als an ihrem Anfang. Bei dieser Ausbildung der Einzugsnuten ist die Querschnittshöhe über die gesamte Länge der Einzugsnuten festgelegt, so daß eine Anpassung der Verarbeitungsgeschwindigkeit an unterschiedliche Qualitäten des zu verarbeitenden Kunststoffmaterials nur durch die Regelung der Rotationsbewegung des drehbaren Längenabschnitts der Einzugsbüchse erzielt werden kann. Es finden dabei zwischen den Einzugsnuten des drehbaren Längenabschnitts der Einzugsbüchse und dem Umfang der Extruderschnecke drallartige Verlagerungsbewegungen statt. Dabei ist zu beachten, daß ein Versperren der Nutquerschnitte zwischen dem feststehenden Längenabschnitt und dem drehbaren Längenabschnitt vermieden werden muß.

In der europäischen Offenlegungsschrift A2-00 69 271 ist ein Schneckenextruder mit einem Extruderzylinder beschrieben, in dem eine drehbare Extruderschnecke gelagert ist. In der Innenumfangsfläche der Eingangszone bzw. der Eingangsbüchse des Extruderzylinders sind im Einzugsbereich vor und hinter der Einfüllöffnung für das Kunststoffrohmaterial Nuten angeordnet, die einen dreieckförmigen Querschnitt besitzen und wendelförmig verlaufen. Die Nuten laufen von einer maximalen Nutentiefe am Anfang des Einzugsbereichs auf eine Nutentiefe gleich 0 am Ende des Einzugsbereichs aus. Die Gestalt, d. h. der Längsquerschnitt der Nuten sowie ihre Anzahl, liegt somit fest und kann nur durch Austausch des Extruderzylinders geändert werden.

In Plastifizierextrudern wird bekanntlich Kunststoffrohmaterial in der Eingangszone gefördert und verdichtet und in der Kompressions- oder Aufschmelzzone geschmolzen. In der Dosier- bzw. Meteringzone wird die Schmelze homogenisiert und auf den notwendigen Werkzeugdruck gebracht. Bei der Gestaltung der Einzugszone sind nach dem heutigen Stand der Technik zwei Konzepte üblich, nämlich der glatte Schnecken- oder Extruderzylinder beim konventionellen Konzept und der genutete Zylinder beim förderwirksamen bzw. sogenannten fördersteifen Konzept.

Der genutete Extruderzylinder wurde zuerst bei der Verarbeitung schwer förderbarer Kunststoffpulver — hauptsächlich hochmolekularem Polyethylen — angewandt, dessen Verarbeitung in konventionellen Extrudern nur unvollkommen gelang. Heute werden nach dem förderwirksamen Konzept nicht nur Kunststoffpulver, sondern infolge der Vorteile dieses Konzeptes auch ein Großteil des Kunststoffgranulates gefördert. Generell eignet sich dieses Konzept immer dann, wenn der Reibungskoeffizient zwischen den Kunststoffteilchen um einen gewissen Betrag größer ist als der Reibungskoeffizient zwischen der Kunststoffschüttung und den metallischen Wänden des Extruderzylinders. Dann nämlich stellt sich ein gegenüber dem konventionellen Konzept wesentlich höherer Durchsatz ein, der weitgehend vom Gegendruck, d. h. Werkzeugdruck, unabhängig ist. Bekanntlich funktioniert das System aber nur dann, wenn die Nuten der Einzugszone stark gekühlt werden, so daß ein An- oder gar ein Aufschmelzen der Kunststoffpartikeln vermieden wird.

Nach dem Stand der Technik hat die genutete Einzugszone bei einem Innendurchmesser D der Einzugsbüchse eine Länge von L = 2-4 D, wobei die Nuten entweder achsparallel oder wendelförmig verlaufen. Es werden aber bereits auch Einzugslängen bis zu L = 5-6 D genannt, die bei Druckunabhängigkeit des Ausstoßes größere Schneckenkanaltiefen und damit letztlich größere Durchsätze ermöglichen. Die in die Einzugsbüchse eingebrachten Nuten sind in der Regel konisch ausgeführt, d. h. sie laufen über das Tiefstmaß am Kanaleingang stetig bis zum Ende der Einzugszone aus. Häufig verwendet werden Nuten mit Rechteck-, Dreieck-, Halbrund- oder Sichelprofilen. Die Nuten sind in die Innenumfangsfläche der Einzugsbüchse eingestoßen oder eingefräst und bleiben während des Betriebes in ihrer Anzahl, Breite, Tiefe und Länge konstant.

Diese in den Extruderzylinder fest eingebrachte Nutung erfordert beim Anfahren des Extruders ein zum konventionellen System mit glattem Extruderzylinder vergleichsweise hohes Anfahrdrehmoment. Dies bedingt in vielen Fällen sowohl einen stark überdimensionierten Elektromotor mit Getriebe als auch zu robust ausgeführte Bauteile wie Schnecke und Schneckenzylinder. Beides ist nicht nur kostentreibend, sondern durch die zwangsweise relativ breiten Schneckenstege auch unwirtschaftlich, da wirksame Kanalfläche verloren geht und der Förderwirkungsgrad reduziert wird.

Mit dem hohen Anfahrdrehmoment ist die Tatsache verbunden, daß genutete Extruderzylinder beim Anfahren zum Überheizen des Materials im Einzugsbereich neigen. Die Folge hiervon ist ein Materialverlust, da der stationäre Betriebszustand erst später erreicht wird und die Schmelze durch die erhöhte Temperatur stärker abgebaut wird. Das Erreichen des stationären Zustands kann dann in der Praxis 2 bis 3 Stunden dauern.

Neben den Nachteilen beim Anfahrvorgang hat das starre genutete System auch gravierende Nachteile im stationären Betrieb. Der Durchsatz genuteter Einzugsbüchsen wird hauptsächlich durch die Reibungsverhältnisse an der glatten Zylinderwand und in den Nuten bzw. an den Nutenscherflächen, der Einzugsbüchsen- und der Schneckengeometrie und der Schneckendrehzahl bestimmt. Der Durchsatz ist dagegen bei ausreichender Einzugsbüchsenlänge unabhängig vom Druckverlauf in der Aufschmelz- und Dosierzone. Umgekehrt bedeutet dies aber auch, daß der durch die Einzugszone vorgegebene Durchsatz durch die anschließenden Zonen nicht mehr verändert werden kann und diese durch die Einzugszone überfahren werden.

Für die Schneckengeometrie der Dosierzone, die infolge des zu erwartenden Materialdurchsatzes festgelegt wird, ergibt sich näherungsweise ein Druck $\Delta p$ in der Größenordnung von

$$\Delta p \approx \frac{12\,\eta L}{h^3} \cdot \left( \frac{\pi n D h \cos \emptyset}{2} - \frac{\dot{m}}{\rho B} \right) .$$

Die einzelnen Größen werden im nachfolgenden Beispiel im einzelnen angegeben. Beträgt beispielsweise der Druck $\Delta p \approx 0$ bar — wie dies in der europäischen Offenlegungsschrift A2-0 069 271 beschrieben wird und minimalen Scherabbau bedeutet — so kann es während des Betriebes aufgrund geänderter Reibungsverhältnisse, wie z. B. durch geänderte Kornform des Produktes, Verarbeitung mehrerer Materialien auf dem Extruder, unterschiedliche Geschwindigkeiten oder Temperaturen oder infolge geänderter Schüttdichte $\rho s$ in der Einzugszone, zu Durchsatzänderungen kommen. Diese haben dann in der Dosierzone einen Druckaufbau oder, was weniger erwünscht ist, einen Druckabbau zur Folge, wie ihn das folgende Beispiel verdeutlicht :

Beispiel

| | |
|---|---|
| Viskosität | $\eta = 300$ Pas, Kanallänge L = 6,6 m |
| Kanalhöhe | h = 8 mm, Drehzahl N = 49 $min^{-1}$ |
| Durchmesser | D = 200 mm, Gangsteigungswinkel |

$\emptyset = 17,6°$, Durchsatz $\dot{m}$ von Einzugszone = 900 kg/h,
Schmelzdichte $\rho = 750$ kg/m$^3$, Kanalbreite B = 170 mm.

Für diese Daten errechnet sich in der Dosierzone ein Druckabfall von $\Delta p \approx -1,6$ bar, was dem obengenannten Optimum $\Delta p \approx 0$ bar sehr nahe kommt.

Ändert sich nun bei den obengenannten Bedingungen der Durchsatz auf beispielsweise $\dot{m} = 1\,100$ kg/h, so bedeutet dies, daß in der Dosierzone der Druck um ca. 204 bar abfällt, was zu Lasten der Produktqualität infolge höherer Scherung geht und zusätzlich eine höhere Antriebsleistung erfordert.

Liegen für die Extruderauslegung die Reibungswerte nicht vor oder sind diese nur sehr grob zu messen — nach dem derzeitigen Stand der Technik können die Reibungswerte nur bis zu Temperaturen von 160 °C bei Drücken bis zu 100 bar gemessen werden, obwohl in der Einzugszone je nach Material höhere Temperaturen und Drücke vorliegen — so kann dies zu einer ungenügenden Abstimmung zwischen den Zonen führen. Die Folge hiervon sind zu hohe Drükke am Eingang der Dosierzone oder bereits in der Aufschmelzzone, wenn diese beispielsweise als Barr-Schnecke ausgeführt ist. Ist letztere für den zu verarbeitenden Durchsatz zu kurz ausgebildet, so führt dies zu Materialquetschungen vor dem Barrieresteg, wobei Drücke von mehr als 1000 bar iniziiert werden. Auch kann es zu relativ großen Druckschwankungen an der Schneckenspitze kommen, wenn die Nutenform und -anzahl nicht auf die Korngeometrie abgestimmt ist. Große Unterschiede im dynamischen Verhalten des Extruders zeigen sich beispielsweise auch beim Übergang von kugelförmigem auf linsenförmiges Granulat.

Aufgabe der Erfindung ist es, eine genutete Einzugsbüchse eines Schneckenextruders der eingangs beschriebenen Art so zu verbessern, daß ein Überhitzen des Kunststoffmaterials beim Anfahren des Extruders sowie ein Materialverlust im stationären Betrieb des Extruders nicht mehr auftreten und die Tiefen der Nuten schnell und sicher auf sich ändernde Materialeigenschaften sich derart einstellen lassen, daß die gewünschten Betriebsbedingungen im Extruder erhalten werden.

Diese Aufgabe wird erfindungsgemäß dadurch gelöst, daß die in die Nuten eingefügten Paßstücke eine Höhe H kleiner als die Tiefe T der Nuten aufweisen, daß jedes Paßstück mit mehreren Bolzen verschraubt ist, die in der Einzugsbüchse versenkte zylindrische Löcher durchsetzen, daß die Lochdurchmesser größer als die Breite B der Nuten sind und daß jeden Bolzen in dem Loch eine Schraubfeder koaxial umgibt, die den Bolzen radial nach außen gegen einen Nockenring bzw. ein Nockensegment preßt.

Die weitere vorteilhafte Ausgestaltung der Erfindung ergibt sich aus den Merkmalen der Ansprüche 2 bis 15.

Mit der erfindungsgemäßen Ausgestaltung des Schneckenextruders wird der Vorteil erzielt, daß die Anzahl der Nuten im Betrieb, ihre Tiefe und auch ihre konische Ausbildung in Längsrichtung verändert werden können. Hierdurch kann im Betrieb einerseits der Durchsatz derart eingestellt werden, daß sich optimale bzw. gewünschte Verhältnisse entlang der Schneckenachse ergeben und andererseits durch die Auswahl einer bestimmten Nutengeometrie die Druckpulsationen an der Schneckenspitze minimal werden. Beim Anfahren des Extruders können durch die Verstellmechanismen die Nuten ganz zugefahren werden, wodurch der Schneckenzylinder eine glatte Innenumfangsfläche mit sehr kleinem äußerem Reibungswert aufweist. Ist der Schneckenextruder auf die Betriebsdrehzahl hochgefahren, so können die Paßstücke in den Nuten stetig bis in die gewünschte Endstellung verstellt werden, um die gewünschte Nutengeometrie zu erhalten. Der Schmelzdruck wird dazu an mindestens zwei verschiedenen Stellen der Dosierzone gemessen und entsprechend den Meßwerten die Verstellung der Paßstücke in den Nuten vorgenommen.

Die Veränderung der Zylindernutung kann auf verschiedene Weise erfolgen. Im folgenden wird die Erfindung anhand von zeichnerisch dargestellten Ausführungsbeispielen näher erläutert. Es zeigen :

Figur 1 einen Längsschnitt durch eine Ausführungsform der Einzugsbüchse eines Schneckenextruders nach der Erfindung ;

Figur 2 eine Schnittansicht durch die Einzugsbüchse entlang der Linie R-R in Figur 1 und einen Verstellmechanismus, der an einem Nockenring an der Außenseite des Schneckenextruders angreift ;

Figur 3 Einzelheiten des Verstellmechanismus sowie von Verstellbolzen und zwei verschieden tief eingestellten Nuten in Schnittansicht ;

Figuren 4 und 5 Längsschnitte durch eine andere Ausführungsform der Einzugsbüchse des Schneckenextruders, mit unterschiedlichen Nutenprofilen ;

Figur 6 Einzelheiten des Verstellmechanismus wie in Figur 3, mit gegenüber Figur 3 abgewandelten Verstellbolzen, und

Figur 7 Einzelheiten des Verstellmechanismus, mit gegenüber den Figuren 3 und 6 anderen Verstellbolzen.

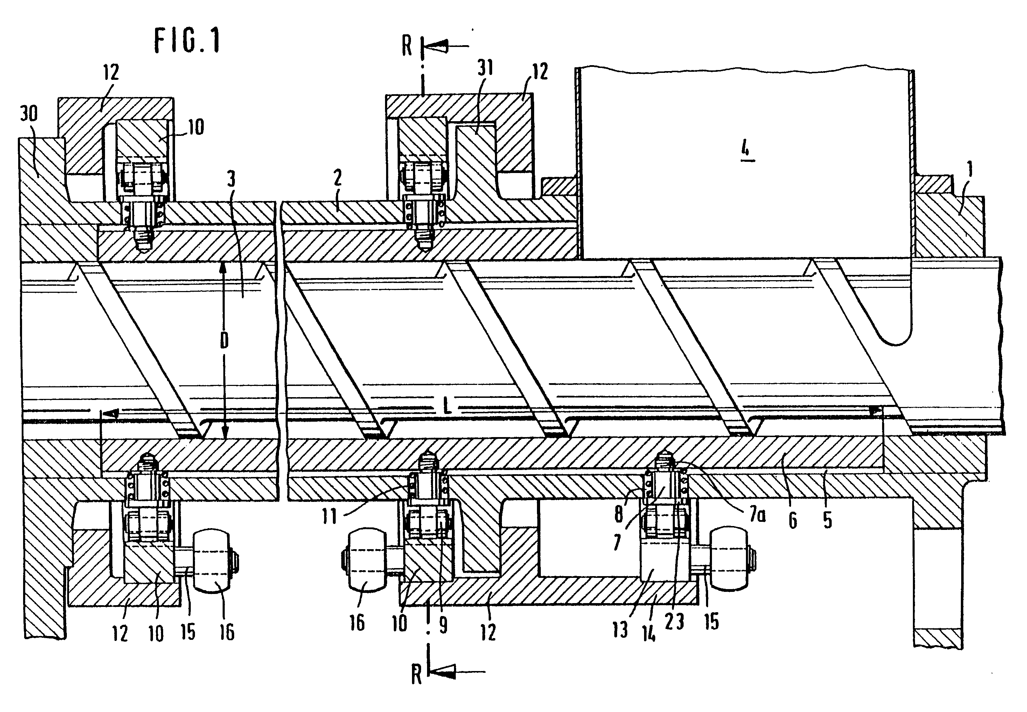

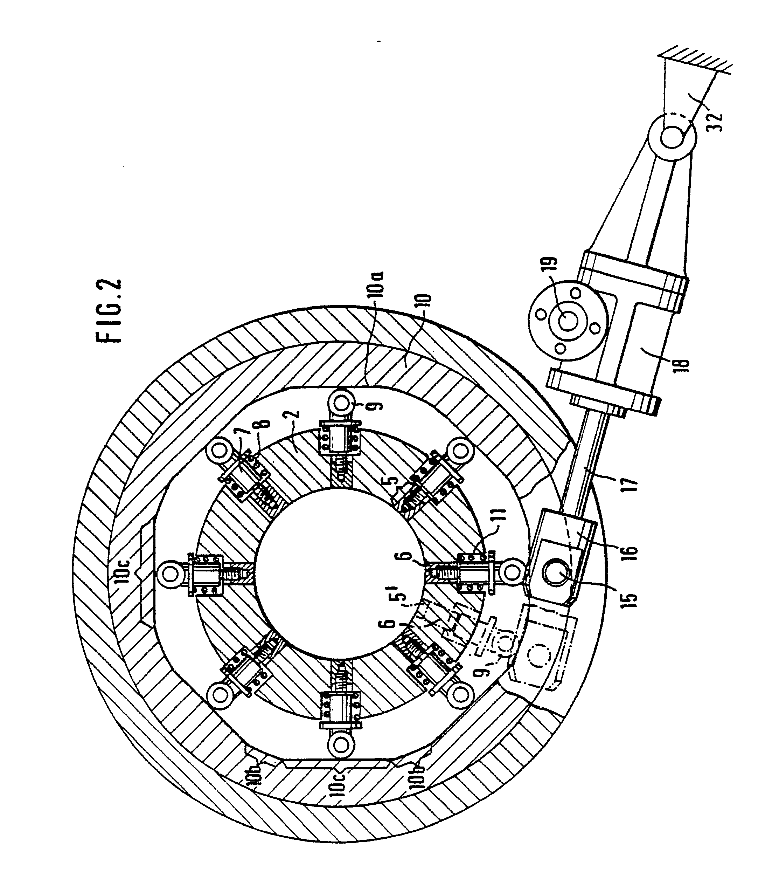

In Figur 1 ist der Einzugsbereich eines Schneckenextruders, bestehend aus einem Gehäuse 1 mit einer Einzugsbüchse 2, der darin gelagerten und sich drehenden Extruderschnecke 3 und einem Einfülltrichter 4 dargestellt. In der Einzugsbüchse 2 sind achsparallele Nuten 5 ausgefräst, in denen Paßstücke 6 angeordnet sind, die in radialer Richtung zu der Extruderschnecke 3 über die Tiefe der Nuten 5 mittels eines Verstellmechanismus 16, 17, 18 (siehe Figur 2) verstellbar sind. Durch die radiale Verschiebung der Paßstücke nach außen, weg von der Mittelachse des Schneckenextruders, werden achsparallele Längsnuten 5' in den Nuten 5 der Einzugsbüchse 2 freigegeben. In der Zeichnung sind acht Nuten 5 dargestellt, jedoch sind diese nicht auf diese Anzahl beschränkt. Es können vier bis zehn Nuten über die Innenumfangsfläche der Einzugsbüchse 2 gleichmäßig verteilt sein. Die Länge einer förderwirksamen Nut 5 erstreckt sich vorteilhafterweise über drei bis fünf Innendurchmesser D der Einzugsbüchse 2, wobei das Maß des Einfülltrichters 4 nicht mitgerechnet wird. Im Bereich des Einfülltrichters 4 sind die Nuten 5 nur auf der der Trichtereinfüllöffnung gegenüberliegenden Seite angeordnet. Obwohl dies nicht dargestellt ist, können die Nuten auch wendelförmig ausgebildet sein, was jedoch fertigungstechnisch schwierig herzustellende Paßstücke erfordert.

Über den Verstellmechanismus wird die Tiefe der Längsnuten 5' dem erforderlichen Betriebszustand angepaßt. Die Paßstücke werden, über ihre Länge gesehen, von Verstellbolzen, weiterhin nur Bolzen 7 genannt, gehalten. Diese Bolzen 7 sind mit abgesetzten Gewindestiften 7a versehen, die mit den Paßstücken 6 verschraubt sind. Diese Bolzen erstrecken sich durch Löcher 8 in der Einzugsbüchse 2 und stützen sich über Laufrollen 9 auf Nockenringen 10 bzw. einem Nockensegment 13 ab. Die Laufrollen 9

EP 0 171 756 B1

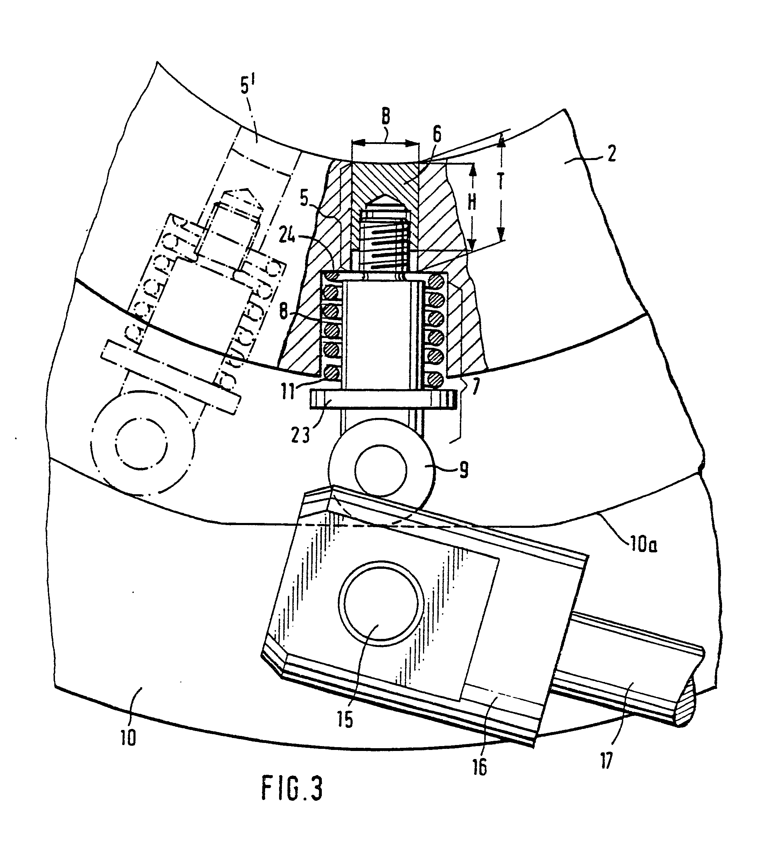

sind in den außerhalb der Einzugsbüchse 2 liegenden Bolzenenden gelagert. Die Anpressung auf die Nockenringe 10 erfolgt über Schraubenfedern 11, die die Bolzen 7 koaxial in den Löchern 8 umgeben und sich mit einem Ende gegen eine Stirnfläche 24 und mit dem anderen Ende gegen einen Bund 23 (Figur 3) des Bolzens 7 abstützen. Die Anzahl der Nockenringe 10 hängt von der Länge der Nuten 5 bzw. der Paßstücke 6 ab. Die beiden vorderen Nockenringe 10 sind in geteilten Gehäusen 12 gelagert, die mit einem Flansch 30 des Gehäuses 1 lösbar verschraubt sind. Im Bereich des Einfülltrichters 4 ist nur das halbringförmige Nockensegment 13 vorhanden, das in einem ebenfalls halbringförmigen Gehäuse 14 gelagert ist. Das halbringförmige Gehäuse 14 ist mit einem Flansch 31 des Gehäuses lösbar verbunden, beispielsweise verschraubt, und bildet eine Einheit mit dem Gehäuse 12, das dem Einfülltrichter 4 schräg gegenüber liegt.

An den Nockenringen 10 und dem Nockensegment 13 sind Bolzen 15 angebracht, die über Köpfe 16 und Gewindespindeln 17 mit Hubspindelgetrieben 18 verbunden sind. Jeder Kopf 16 bildet mit der zugehörigen Gewindespindel 17 und dem Hubspindelgetriebe 18 einen Verstellmechanismus. Die Hubspindelgetriebe 18 haben eine gemeinsame Welle 19, die von einem nicht dargestellten Motor angetrieben wird und eine synchrone Verstellung der Nockenringe 10 und des Nockensegments 13 gewährleistet. Bei der Ausführungsform nach Figur 1 sind die Paßstücke 6 zunächst so in den Nuten 5 angeordnet, daß sie mit der Innenumfangsfläche der Einzugsbüchse 2 glatt abschließen.

Figur 2 zeigt eine Schnittansicht längs der Linie R-R der Einzugsbüchse 2 in Figur 1. Über den Umfang der Einzugsbüchse 2 sind acht Nuten 5 vorgesehen, in denen Paßstücke 6 gleichmäßig verteilt angeordnet sind, die glatt mit der Innenumfangsfläche der Einzugsbüchse 2 abschließen. Der Nockenring 10 besitzt für die Laufrollen 9 eine Lauffläche 10a, die im wesentlichen aus gleich großen Umfangsstücken 10b eines zur Längsachse der Einzugsbüchse 2 konzentrisch angeordneten Kreises vorgegebenen Radius besteht, wobei diese Umfangsstücke 10b durch Nockenstücke 10c miteinander verbunden sind, die in Richtung der Längsachse der Einzugsbüchse 2 gewölbt sind. Durch diese Geometrie der Lauffläche 10a ist sichergestellt, daß in einer Position des Nockenrings 10, in der die Laufrollen 9 gegen die Mitte der Umfangsstücke 10c durch die Schraubfedern 11 angepreßt werden, die Paßstücke 6 glatt mit der Innenumfangsfläche der Einzugsbüchse 2 abschließen. Der Verstellmechanismus 16, 17, 18 für den Nockenring 10 nimmt dabei die mit durchgehenden Linien eingezeichnete Stellung ein, und sein Hubspindelgetriebe 18 stützt sich in einem Lager 32 ab. Eine Verstellung des Nockenrings 10 durch den Verstellmechanismus, wobei die Gewindespindel 17 über einen bestimmten Hub ausgefahren wird, bringt die Laufrollen 9 jeweils in Anpreßkontakt mit der Mitte der zugehörigen Umfangsstücke 10b. Diese Position einer einzelnen Laufrolle 9 sowie die Position der ausgefahrenen Gewindespindel 17 sind gestrichelt dargestellt, wobei zu beachten ist, daß aus Darstellungsgründen die gestrichelten Positionen gegenüber den mit festen Linien eingezeichneten Positionen der Laufrollen und des Verstellmechanismus seitlich versetzt gezeichnet sind, während sie in Wirklichkeit an der Stelle der fest eingezeichneten Stellungen der Laufrollen und des Verstellmechanismus vorgestellt werden müssen. Das Paßstück 6 innerhalb einer Nut 5 wird über die Bolzen 7 mittels der Schraubfedern 11 nach außen gegen die Mitte der Umfangsstücke 10b gepreßt und da diese am weitesten von der Mittelachse der Einzugsbüchse 2 entfernt sind, in der Nut 5 so weit nach außen zurückgestellt, daß die Längsnut 5' ihre maximale Tiefe annimmt. Es ist selbstverständlich, daß die Gewindespindel 17 des Verstellmechanismus auch weniger weit ausgefahren werden kann, so daß der Nockenring 10 eine Stellung einnimmt, in der die Laufrollen 9 in Stellungen anliegen, in denen die Paßstücke 6 eine Zwischenstellung in den Nuten 5 einnehmen, so daß die dadurch gebildeten Längsnuten 5' eine mittlere Tiefe, die zwischen der minimalen und der maximalen Tiefe liegt, aufweisen.

Figur 3 zeigt in vergrößertem Maßstab einen Ausschnitt aus Figur 2, aus dem die Positionen des Nockenrings 10 und der Laufrollen 9 einerseits bei radial nach außen versetztem Paßstück 6 und andererseits bei radial nach innen gesetztem Paßstück 6, das dann mit der Innenumfangsfläche der Einzugsbüchse 2 glatt abschließt. deutlich zu erkennen sind. Die maximale Tiefe der Laufnut 5' ergibt sich aus der Differenz der Tiefe T der Nut 5 und der Höhe H des Paßstückes 6, das die Gestalt eines langgestreckten Quaders mit der Breite B und einer Länge gleich der Länge der Nut 5 besitzt.

Der Bolzen 7 ist mit dem Bund 23 versehen, gegen den die Schraubfeder 11 mit einem Ende anliegt, während ihr anderes Ende gegen die Stirnfläche 24 anliegt. Die Schraubfeder 11 verstellt somit den Bolzen innerhalb der Nut so weit radial nach außen bis die Laufrolle 9 an die Lauffläche 10a des Nockenrings 10 angepreßt ist.

Im folgenden wird ein Verstellvorgang beschrieben. Der Extruder wird mit einer glatten Einzugsbüchse 2 angefahren, um das Antriebsmoment des Verstellmotors gering zu halten. Nach Erreichen eines bestimmten Betriebszustandes wird durch Druckfühler in der Dosierzone und an der Schneckenspitze eine Optimierung durch Variation der Nutengeometrie im Einzugsbereich durchgeführt. Zur Einstellung der optimalen Nutentiefe der Längsnuten 5' werden über den Verstellmotor die Hubspindelgetriebe 18 betätigt. Über die Gewindespindeln 17, die über die Köpfe 16 an den Nockenringen 10 angelenkt sind, werden die Nockenringe 10 und das Nockensegment 13 verdreht. Je nach der Größe der Drehung kann die Tiefe der Längsnuten 5' vergrößert oder verkleinert werden. Durch die Verdrehung der Nockenringe 10 und des Nockensegments 13 werden über die Bolzen 7, die sich über die Laufrollen 9 auf die Nockenringe 10 und das Nockensegment 13 abstützen, die Paßstücke 6 in den Nuten 5 radial verschoben. Dadurch werden die Nuttiefen variiert. Ensprechend dem jeweiligen Kunststoffrohmaterial und dem

5

gewünschten Durchsatz können über diesen Verstellmechanismus die Nuttiefen eingestellt werden, um einen optimalen Betriebszustand zu erreichen.

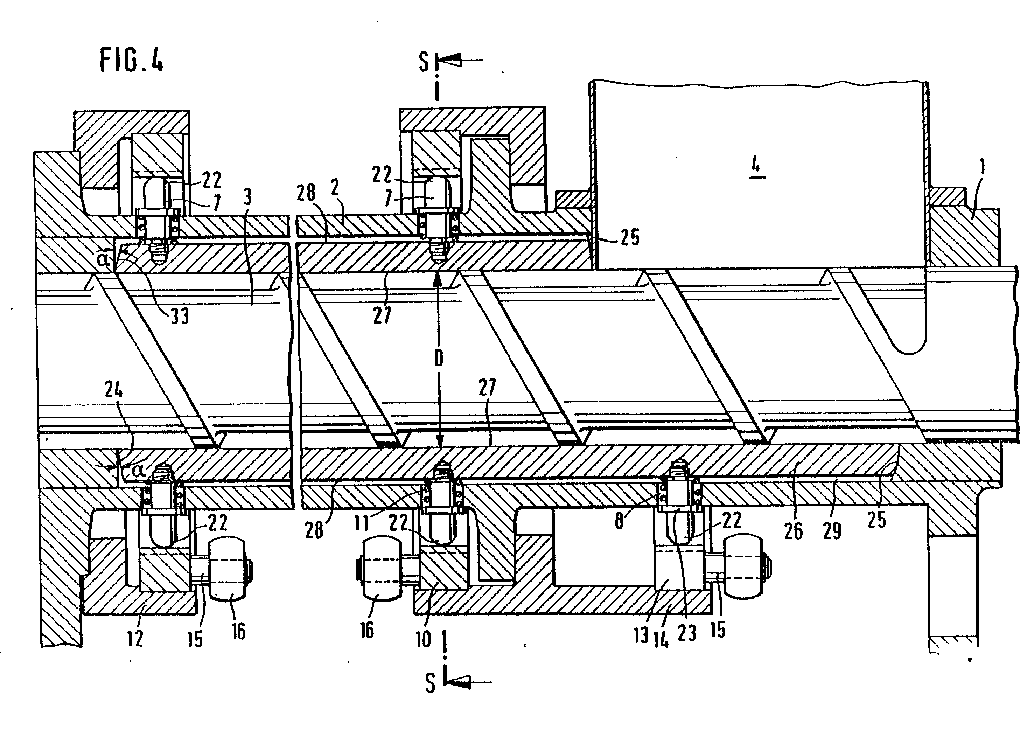

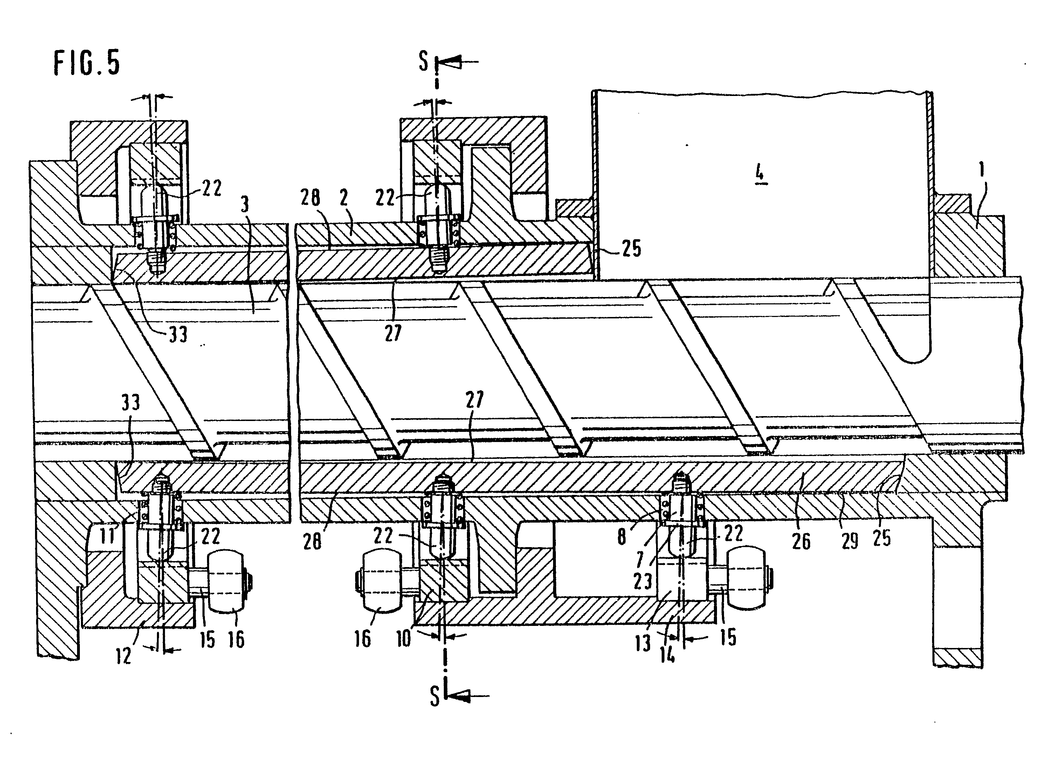

In den Figuren 4 und 5 sind jeweils ein Längsschnitt, ähnlich wie in der Figur 1, einer weiteren Ausführungsform der Einzugsbüchse 2 des Schneckenextruders dargestellt. Gegenüber der Ausführungsform nach Figur 1 ergeben sich Unterschiede in der Ausgestaltung der Verstellbolzen, die mit den gleichfalls veränderten Paßstücken verbunden sind. Jedes Paßstück 26 dieser Ausführungsform besitzt einen von der Rechteckform abweichenden Längsschnitt dessen zwei Längsseiten 27, 28 zueinander parallel verlaufen und von unterschliedlicher Länge sind. Die eine Schmalseite 33 des Paßstückes 26 ist geradlinig und verbindet schräg die beiden Längsseiten miteinander. Die andere Schmalseite 25 des Paßstückes 26 hat eine kreisförmige Krümmung mit einem Radius gleich der Länge der größeren Längsseite 27.

So wie sich das Paßstück 26 von dem Paßstück 6 unterscheidet, gibt es auch Unterschiede im Längsschnitt der Nut 29 dieser Ausführungsform im Vergleich zu der Nut 5 der Ausführungsform nach Figur 1. Der Längsschnitt jeder Nut 29 ist mit der größeren Längsseite 27 und der gekrümmten Schmalseite 25 jedes Paßstückes 26 deckungsgleich. Die geradlinige Schmalseite jeder Nut 29 verläuft senkrecht zu den Längsseiten 27 und 28 des Paßstückes 26 und schließt einen spitzen Winkel $\alpha$ mit der schrägverlaufenden Schmalseite 33 des Paßstückes 26 in der Weise ein, daß die Spitze des Winkels $\alpha$ auf der Innenumfangsfläche der Einzugsbüchse 2 liegt.

Die Bolzen 7 dieser Ausführungsform der Einzugsbüchse 2 unterscheiden sich insofern von den Bolzen 7 der Ausführungsform nach Figur 1, daß sie keine Laufrollen aufweisen, sondern anstatt dessen Andrehungen 22, die gegen die Nockenringe 10 anliegen.

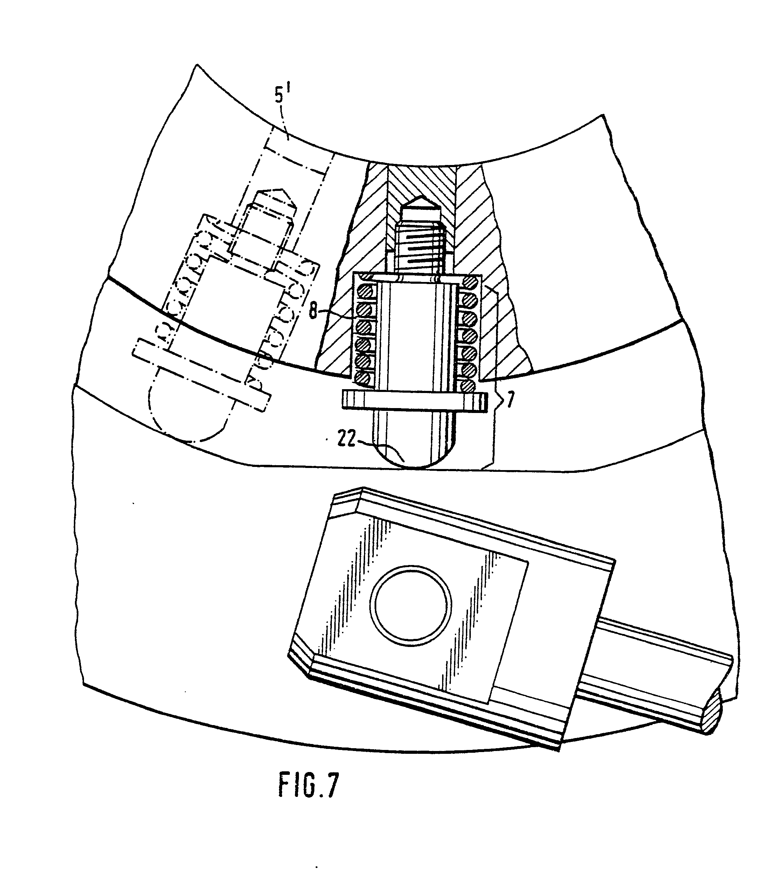

In Figur 7, die eine Schnittansicht längs der Linie S-S der Figuren 4 und 5 wiedergibt, ist einer der Bolzen 7 mit der kalottenförmigen Andrehung 22 des radial nach außen gerichteten Bolzenendes vergrößert dargestellt. Die kalottenförmige Andrehung 22 ermöglicht, da sie nur einen Berührungspunkt und nicht eine Berührungslinie, wie die Laufrolle 8 bei der ersten Ausführungsform des Bolzens mit der Lauffläche des Nockenrings 10 besitzt, eine leichte Schrägstellung des Bolzens 7 innerhalb des Lochs 8 in bezug auf die Schnitt- bzw. Zeichenebene, so daß die Bolzen entsprechend der Schräglage der einzelnen Paßstücke 26 sich in den Nuten 29 schräg stellen, wie dies aus der Figur 5 ersichtlich ist. Diese zeigt, daß die Tiefen der Längsnuten in axialer Richtung der Einzugsbüchse 2 unterschiedlich tief eingestellt sind, was bedeutet, daß die Längsseiten 27 der einzelnen Paßstücke 26 in den Nuten 29 schräg zu der Längsachse der Einzugsbüchse 2 verlaufen. Diese Schrägstellung der Paßstücke 26 wird durch die unterschiedlichen Verstellungen der axial hintereinander über den Umfang der Einzugsbüchse 2 angeordneten Nockenringe 10 und des Nockensegments 13 mittels der zugehörigen Verstellmechanismen 16 bis 18 erhalten sowie durch die speziellen Ausgestaltungen der Paßstücke 26 und der Nuten 29, die eine Schrägstellung der ersten in der Weise ermöglichen, daß die Stoßlinie zwischen der schrägen Schmalseite 33 und der größeren Längsseite 27 der Paßstücke als Schwenk- bzw. Drehachse wirkt.

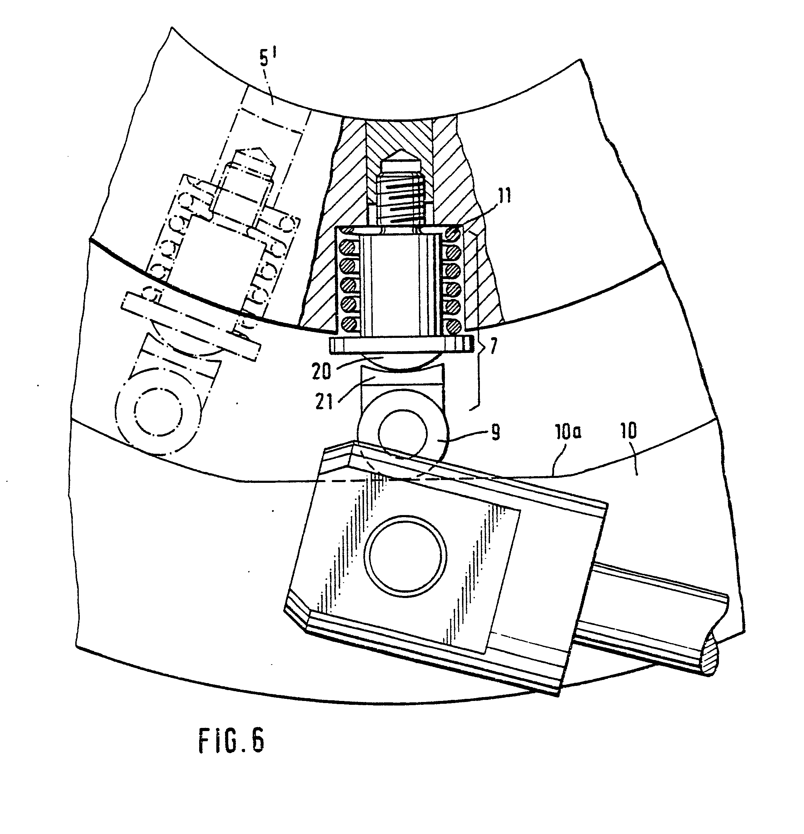

Figur 6 zeigt gleichfalls eine etwas veränderte Ausgestaltung der Bolzen 7 im Vergleich zu derjenigen nach den Figuren 3 und 7. Gegenüber der Ausgestaltung nach Figur 3 sind die Bolzen 7 unterbrochen und bestehen aus zwei Teilen, von denen der eine Teil eine kalottenförmige Andrehung 20 aufweist, die sich auf eine pfannenförmige Ausdrehung 21 des anderen Teils abstützt. Die Andrehung 20 und die Ausdrehung 21 weisen unterschiedliche Radien auf, so daß es zwischen ihnen nur zu einer Punktberührung kommt. In dem Bolzenteil mit der pfannenförmigen Ausdrehung 21 ist ebenso wie bei der Ausgestaltung nach Figur 3 eine Laufrolle 9 gelagert, die von der Schraubfeder 11 gegen die Lauffläche 10a des Nockenrings 10 bzw. des Nockensegments 13 angepreßt wird. Der obere Teil des Bolzens, der sich mit seiner kalottenförmigen Andrehung 20 auf die pfannenförmige Ausdrehung 21 des unteren Teils des Bolzens abstützt, ist mit dem Paßstück verbunden und kann sich der Schrägstellung des Paßstükkes innerhalb der Nut anpassen. Es liegt auf der Hand, obgleich dies nicht dargestellt ist, daß der zweiteilige Bolzen 7 anstelle des einteiligen Bolzens 7 in der Ausführungsform der Einzugsbüchse 2 nach den Figuren 4 und 5 verwendet werden kann.

## Patentansprüche

1. Schneckenextruder mit einer eine Extruderschnecke koaxial umgebenden Einzugsbüchse, die im Bereich des Materialeinlaufs angeordnet ist und an ihrem Innenumfang mehrere in Umfangsrichtung verteilte, längsverlaufende Nuten aufweist, in denen Paßstücke angeordnet sind, die radial zu der Extruderschnecke über die Tiefe der Nuten mittels Verstellmechanismen verstellbar sind, dadurch gekennzeichnet, daß die in die Nuten (5 ; 29) eingefügten Paßstücke (6 ; 26) eine Höhe H kleiner als die Tiefe T der Nuten (5 ; 29) aufweisen, daß jedes Paßstück (6 ; 26) mit mehreren Bolzen (7) verschraubt ist, die in der Einzugsbüchse (2) versenkte zylindrische Löcher (8) durchsetzen, daß Lochdurchmesser größer als die Breite B der Nuten (5 ; 29) sind und daß jeden Bolzen (7) in dem Loch eine Schraubfeder (11) koaxial umgibt, die den Bolzen (7) radial nach außen gegen einen Nockenring (10) bzw. ein Nockensegment (13) preßt.

2. Schneckenextruder nach Anspruch 1, dadurch gekennzeichnet, daß jeder Bolzen (7) einen abgesetzten Gewindestift (7a) aufweist, der mit einem Gewindeloch im Paßstück (6 ; 26) verschraubt ist.

3. Schneckenextruder nach Anspruch 1, dadurch gekennzeichnet, daß die Schraubfeder (11) sich mit dem einen Ende gegen die an die Nut angrenzende Stirnfläche (24) des zylindrischen Loches (8) und mit dem anderen Ende gegen einen Bund (23) des Bolzens (7) abstützt.

4. Schneckenextruder nach Anspruch 1, dadurch gekennzeichnet, daß die Anzahl der Nuten (5 ; 29) vier bis zehn beträgt, daß im Bereich des Einfülltrichters (4) die Nuten (5 ; 29) nur auf der der Öffnung des Einfülltrichters (4) gegenüberliegenden Seite der Einzugsbüchse (2) angeordnet sind und daß die Längsachse einer Nut (5 ; 29) und die Lochachse des der Nut zugeordneten Loches (8) in einer Ebene liegen.

5. Schneckenextruder nach Anspruch 4, dadurch gekennzeichnet, daß in den außerhalb der Einzugsbüchse (2) liegenden Bolzenenden Laufrollen (9) gelagert sind, die sich auf Nockenringe (10) bzw. das Nokkensegment (13) abstützen.

6. Schneckenextruder nach Anspruch 5, dadurch gekennzeichnet, daß die im Einzugsbereich des Schneckenextruders außerhalb des Bereichs des Materialeinlaufs angeordneten Nockenringe (10) in geteilten Gehäusen (12) gelagert sind, die mit dem Gehäuse (1) des Schneckenextruders lösbar verbunden sind.

7. Schneckenextruder nach Anspruch 5, dadurch gekennzeichnet, daß das im Bereich des Einfülltrichters (4) angeordnete Nockensegment (13) halbringförmig ausgebildet und in einem halbringförmigen Gehäuse (14) gelagert ist, das mit dem Gehäuse (1) des Schneckenextruders lösbar verbunden ist.

8. Schneckenextruder nach Anspruch 5, dadurch gekennzeichnet, daß an den Nockenringen (10) und dem Nokkensegment (13) Bolzen (15) befestigt sind, die mit den Verstellmechanismen (16-18) aus Köpfen (16), Gewindespindeln (17) und Hubspindelgetrieben (18) verbunden sind.

9. Schneckenextruder nach Anspruch 8, dadurch gekennzeichnet, daß die Hubspindelgetriebe (18) eine gemeinsame Welle (19) besitzen, die ein Motor zum synchronen Verstellen der Nockenringe (10) und des Nockensegments (13) antreibt.

10. Schneckenextruder nach Anspruch 8, dadurch gekennzeichnet, daß die Gewindespindeln (17) über die Köpfe (16) an den Bolzen (15) der Nockenringe (10) und des Nockensegments (13) angelenkt sind.

11. Schneckenextruder nach Anspruch 1, dadurch gekennzeichnet, daß jedes Paßstück (6) einen rechteckigen Längsschnitt aufweist, dessen Längsseiten gleich der axialen Länge L der Nut (5) und dessen Schmalseiten gleich der Höhe $T_0$ des Paßstückes (6) sind.

12. Schneckenextruder nach Anspruch 1, dadurch gekennzeichnet, daß jedes Paßstück (26) einen Längsschnitt besitzt, dessen zwei Längsseiten (27, 28) zueinander parallel und unterschiedlich lang sind, daß die eine geradlinige Schmalseite (33) schräg die beiden Längsseiten miteinander verbindet und die andere Schmalseite (25) eine kreisförmige Krümmung mit einem Radius gleich der größeren Längsseite (27) aufweist.

13. Schneckenextruder nach Anspruch 12, dadurch gekennzeichnet, daß der Längsschnitt jeder Nut (29) mit der größeren Längsseite (27) und der gekrümmten Schmalseite (25) jedes Paßstückes (26) deckungsgleich ist und daß die geradlinige Schmalseite jeder Nut (29) senkrecht zu den Längsseiten (27, 28) des Paßstückes (26) verläuft und einen spitzen Winkel ($\alpha$) mit der schräg verlaufenden Schmalseite (33) des Paßstückes (26) einschließt.

14. Schneckenextruder nach Anspruch 5, dadurch gekennzeichnet, daß die Bolzen (7) aus zwei Teilen bestehen, von denen der eine Teil eine kalottenförmige Andrehung (20) aufweist, die sich auf eine pfannenförmige Ausdrehung (21) des anderen Teils abstützt und daß die Andrehung (20) und die Ausdrehung (21) unterschiedliche Radien haben.

15. Schneckenextruder nach Anspruch 1, dadurch gekennzeichnet, daß die außerhalb der Einzugsbüchse (2) liegenden Bolzenenden kalottenförmige Andrehungen (22) besitzen, die sich auf die Nockenringe (10) bzw. das Nockensegment (13) abstützen.

**Claims**

1. A screw extruder with a feed bush coaxially surrounding an extruder screw, which feed bush is arranged in the area of the material intake and has around its inner circumference several longitudinally extending grooves distributed in the circumferential direction, the grooves having adapters in them which are radially adjustable relative to the extruder screw over the depth of the grooves by means of adjustment mechanisms, characterized in that the adapters (6 ; 26) inserted in the grooves (5 ; 29) have a height H smaller than the depth T of the grooves (5 ; 29), that each adapter (6 ; 26) is retained by several bolts (7) which pass through cylindrical holes (8) countersunk in the feed bush (2), that hole diameters are greater than the width B of the grooves (5 ; 29), and that each bolt (7) is coaxially surrounded in the hole by a helical spring (11) which presses the bolt (7) radially outwardly, against a cam ring (10) or a cam segment (13).

2. A screw extruder as claimed in claim 1, wherein each bolt (7) is provided with a shouldered-off threaded pin (7a) which is screwed into a threaded hole in the adapter (6 ; 26).

3. A screw extruder as claimed in claim 1, wherein the helical spring (11) is supported at one end

**EP 0 171 756 B1**

against the face (24) of the cylindrical hole (8) adjoining the groove and at the other end against a collar (23) of the bolt (7).

4. A screw extruder as claimed in claim 1, wherein the number of grooves (5 ; 29) is four to ten, wherein, in the region of the filling hopper (4), there are only grooves (5 ; 29) on the side of the feed bush (2) opposite the hole of the filling hopper (4), and wherein the longitudinal axis of a groove (5 ; 29) and the hole axis of the hole (8) associated to the respective groove lie in one common plane.

5. A screw extruder as claimed in claim 4, wherein rollers (9) are borne in the bolt ends lying outside the feed bush (2), which rollers are supported on cam rings (10) or the cam segment (13).

6. A screw extruder as claimed in claim 5, wherein the cam rings (10) arranged in the feed zone of the screw extruder outside the region of the material intake are borne in split casings (12) which are detachably connected to the barrel (1) of the screw extruder.

7. A screw extruder as claimed in claim 5, wherein the cam segment (13) arranged in the region of the filling hopper (4) is of semi-annular design and is borne in a semi-annular casing (14) which is detachably connected to the barrel (1) of the screw extruder.

8. A screw extruder as claimed in claim 5, wherein bolts (15) are fixed on the cam rings (10) and the cam segment (13), which bolts are connected to the adjustment mechanisms (16-18) comprising heads (16), threaded spindles (17) and lifting spindle gears (18).

9. A screw extruder as claimed in claim 8, wherein the lifting spindle gears (18) have a common shaft (10) which is driven by a motor for the synchronous adjustment of the cam rings (10) and of the cam segment (13).

10. A screw extruder as claimed in claim 8, wherein the threaded spindles (17) are hinge-mounted on the bolts (15) of the cam rings (10) and of the cam segment (13) via the heads (16).

11. A screw extruder as claimed in claim 1, wherein each adapter (6) has a rectangular longitudinal section, the longitudinal sides of which are equal to the axial length L of the groove (5) and the narrow sides of which are equal to the height $T_0$ of the adapter (6).

12. A screw extruder as claimed in claim 1, wherein each adapter (26) has a longitudinal section the two longitudinal sides (27, 28) of which extend parallel to each other and are of different length, wherein the one straight-line narrow side (33) obliquely joins up the two longitudinal sides and the other narrow side (25) has a circular curvature with a radius equal to the length of the greater longitudinal side (27).

13. A screw extruder as claimed in claim 12, wherein the longitudinal section of each groove (29) coincides precisely with the greater longitudinal side (27) and the curved narrow side (25) of each adapter (26) and wherein the straight-line narrow side of each groove (29) extends perpendicular to the longitudinal sides (27, 28) of the adapter (26) and encloses an acute angle ($\alpha$) with the obliquely extending narrow side (33) of the adapter (26).

14. A screw extruder as claimed in claim 5, wherein the bolts (7) consist of two parts, of which the one part has a calotte-shaped convex-machined piece (20) which is supported on a cup-shaped concave-machined piece (21) of the other part and wherein the convex-machined piece (20) and the concave-machined piece (21) have different radii.

15. A screw extruder as claimed in claim 1, wherein the bolt ends lying outside the feed bush (2) have calotte-shaped convex-machined pieces (22) which are supported on the cam rings (10) or the cam segment (13).

**Revendications**

1. Extrudeuse à vis comprenant un fourreau d'alimentation entourant coaxialement une vis d'extrudeuse, qui est disposé dans la région de l'entrée de la matière et présente, sur sa circonférence intérieure plusieurs rainures orientées longitudinalement, qui sont réparties dans la direction circonférentielle, et dans lesquelles sont logées des pièces adaptées qui peuvent être réglées dans une direction radiale par rapport à la vis d'extrudeuse en se déplaçant dans le sens de la profondeur des rainures, à l'aide de mécanismes de réglage, caractérisée en ce que les pièces adaptées (6 ; 26) logées dans les rainures (5 ; 29) présentent une hauteur H inférieure à la profondeur T des rainures (5 ; 29), que chaque pièce adaptée (6 ; 26) est maintenue à l'aide de plusieurs vis (7) qui traversent des trous cylindriques (8) creusés dans le fourreau d'alimentation (2), que le diamètre des trous est plus grand que la largeur B des rainures (5 ; 29) et que, dans le trou, chaque vis (7) est entourée coaxialement par un ressort hélicoïdal (11) qui sollicite la vis (7) radialement vers l'extérieur et la presse contre une couronne de cames (10) ou un segment porte-cames (13).

2. Extrudeuse à vis selon la revendication 1, caractérisée en ce que chaque vis (7) présente une tige filetée réduite (7a) qui est assemblée par vissage à un trou fileté de la pièce adaptée (6 ; 26).

3. Extrudeuse à vis selon la revendication 1, caractérisée en ce que le ressort hélicoïdal (11) prend appui par une extrémité contre la surface frontale (24) du trou cylindrique (8) qui est adjacent à la rainure et par l'autre extrémité contre un épaulement (23) de la vis (7).

4. Extrudeuse à vis selon la revendication 1, caractérisée en ce que le nombre des rainures (5 ; 29) est de quatre à dix, que, dans la région de la trémie de chargement (4), les rainures (5 ; 29) sont prévues uniquement sur le côté du fourreau d'alimentation (2) qui est à l'opposé de l'ouverture de la trémie

8

d'alimentation (4), et en ce que l'axe longitudinal (5 ; 29) et l'axe du trou (8) associé à la rainure sont situés dans un même plan.

5. Extrudeuse à vis selon la revendication 4, caractérisée en ce que, dans les extrémités des vis situées à l'extérieur du fourreau d'alimentation (2), sont tourillonnés des galets (9) qui prennent appui sur des couronnes de cames (10) ou sur un segment porte-cames (13).

6. Extrudeuse à vis selon la revendication 5, caractérisée en ce que les couronnes de cames (10) disposées dans la région d'alimentation de l'extrudeuse à vis, en dehors de la région de l'entrée de la matière, sont tourillonnées dans des carters (12) divisés qui sont assemblés au carter (1) de l'extrudeuse à vis par des liaisons démontables.

7. Extrudeuse à vis selon la revendication 5, caractérisée en ce que le segment porte-cames (13) disposé dans la région de la trémie de chargement (4) est de configuration semi-annulaire et est tourillonné dans un carter semi-annulaire (14) qui est assemblé au carter (1) de l'extrudeuse à vis par une liaison démontable.

8. Extrudeuse à vis selon la revendication 5, caractérisée en ce qu'aux couronnes de cames (10) et au segment porte-cames (13), sont fixées des vis (15) qui sont reliées aux mécanismes de réglage (16 à 18) formés de têtes (16), de vis (17) et de mécanismes de vérins à vis (18).

9. Extrudeuse à vis selon la revendication 8, caractérisée en ce que les mécanismes de vérins à vis (18) possèdent un arbre commun (19) qu'un moteur entraîne pour manœuvrer en synchronisme les couronnes de cames (10) et le segment porte-cames (13).

10. Extrudeuse à vis selon la revendication 8, caractérisée en ce que les vis (17) sont articulées par l'intermédiaire des têtes (16) sur les vis (15) des couronnes de cames (10) et du segment porte-cames (13).

11. Extrudeuse à vis selon la revendication 1, caractérisée en ce que chaque pièce adaptée (6) présente un profil longitudinal rectangulaire dont les côtés longitudinaux sont égaux à la longueur axiale L de la rainure (5) dont les petits côtés sont égaux à la hauteur $T_o$ de la pièce adaptée (6).

12. Extrudeuse à vis selon la revendication 1, caractérisée en ce que chaque pièce adaptée (26) possède un profil longitudinal dont deux côtés longitudinaux (27, 28) sont parallèles entre eux et de longueurs différentes, en ce qu'un petit côté étroit rectiligne (33) relie les deux côtés longitudinaux l'un à l'autre obliquement et que l'autre côté étroit (25) présente une courbure en arc de cercle possédant un rayon égal au plus grand des côtés longitudinaux (27).

13. Extrudeuse à vis selon la revendication 12, caractérisée en ce que le profil longitudinal de chaque rainure (29) est superposable au grand côté longitudinal (27) et au petit côté courbe (25) de chaque pièce adaptée (26) et en ce que le petit côté rectiligne de chaque rainure (19) est orienté perpendiculairement aux côtés longitudinaux (27, 28) de la pièce adaptée (26) et forme un angle aigu ($\alpha$) avec le petit côté oblique (33) de la pièce adaptée (26).

14. Extrudeuse à vis selon la revendication 5, caractérisée en ce que les vis (7) sont faites de deux parties, dont une partie présente un bossage tourné (20) en forme de calotte, qui prend appui sur un évidement tourné (21), en forme de cuvette de l'autre pièce, et en ce que le bossage tourné (20) et l'évidement (21) ont des rayons différents.

15. Extrudeuse à vis selon la revendication 1, caractérisée en ce que les extrémités des vis qui sont situées à l'extérieur du fourreau d'alimentation (2) possèdent des bossages tournés (22), en forme de calotte, qui prennent appui sur les couronnes de cames (10) ou sur le segment porte-cames (13).

FIG.1

FIG.2

FIG.3

FIG.4

# FIG.5

EP 0 171 756 B1

FIG.6

FIG.7